# EUROPEAN PATENT SPECIFICATION

(11) **EP 0 802 105 B1**
(45) Date of publication and mention of the grant of the patent: **05.12.2001**
(21) Application number: 97106086.8
(22) Date of filing: 14.04.1997
(51) Int. Cl.: B62D 1/18

(54) **An adjustable steering wheel, particularly for a motor vehicle**
Verstellbares Lenkrad insbesondere für ein Kraftfahrzeug
Volant de direction réglable en particulier pour une véhicule automobile

(30) Priority: 16.04.1996 IT TO960294
(43) Date of publication of application: 22.10.1997
(73) Proprietor: FIAT AUTO S.p.A., 10135 Torino (IT)
(72) Inventor: Bertelli, Alberto, 20139 Milano (IT); Merlini, Luigi, 20132 Milano (IT); Riccardi, Gian Maria, 20095 Asano Milanino (IT)
(74) Representative: Plebani, Rinaldo

(56) References cited:
- GB-A- 783 920
- GB-A- 2 173 578
- US-A- 1 621 206
- US-A- 4 922 426

## Description

The present invention concerns an adjustable steering wheel, particularly for a motor vehicle, and more particularly it concerns a steering wheel the rim of which is pivoted to the hub and able to rotate about a tilt axis perpendicular to the axis of the steering column, and disposed at a predetermined distance below it, according to the features of the preamble of claim 1, and further concerns a vehicle with an adjustable steering wheel.

In motor vehicles in which the driver's compartment is small, for example, in sports cars or "utility vehicles", the size of the steering wheel may be such that it is difficult, for example, to get into the driver's seat, or to perform inspection and maintenance operations in the space below the steering wheel, such as the foot well.

There is therefore a need to remove this obstruction caused by the steering wheel, at least temporarily, subsequently returning the steering wheel to the normal driving position.

At present in the motor vehicle field, especially in vehicles specifically adapted for competitions, it is known to create additional space to enable the driver to get in and out of the driver's seat by completely removing the steering wheel from the steering column.

However, this is not applicable to commercial motor vehicles in which the steering wheel is permanently mounted on the steering column, for reasons of safety and due to the presence of the steering lock device, and the direction indicators and other electrical devices contained at least partially in the hub of the steering wheel.

As an alternative, it is also known (for example from GB-A-2173578, US-A-4922426, GB-A-783920, US-A-1621206) to use adjustable steering wheels which are pivoted to the steering column and/or axially slidable along the steering column: even if this kind of known steering wheels can provide an easier and more comfortable access to the driver's seat, nevertheless they cannot ensure a significant increasing of the available space below the steering wheel, so as to allow easy inspection and maintenance operations to be performed. Each of the mentioned prior art documents discloses the features of the preamble of claim 1.

The aim of the present invention is therefore to provide a steering wheel which, when not in use, can easily and quickly be moved temporarily away from the usual driving position to create additional space in the driver's compartment of the motor vehicle.

In accordance with the specified aim, there is proposed an adjustable steering wheel for a motor vehicle, as claimed in claim 1.

This and other characteristics of the invention will become clearer from the following description of a preferred embodiment, given by way of non-limitative example with reference to the accompanying drawings, in which:
Figure 1 is a sectional side view of the steering wheel according to the invention, in the driving position;
Figure 2 shows the steering wheel of Figure 1 tilted forward over the dashboard; and
Figure 3 is a front view of the steering wheel of Figure 1.

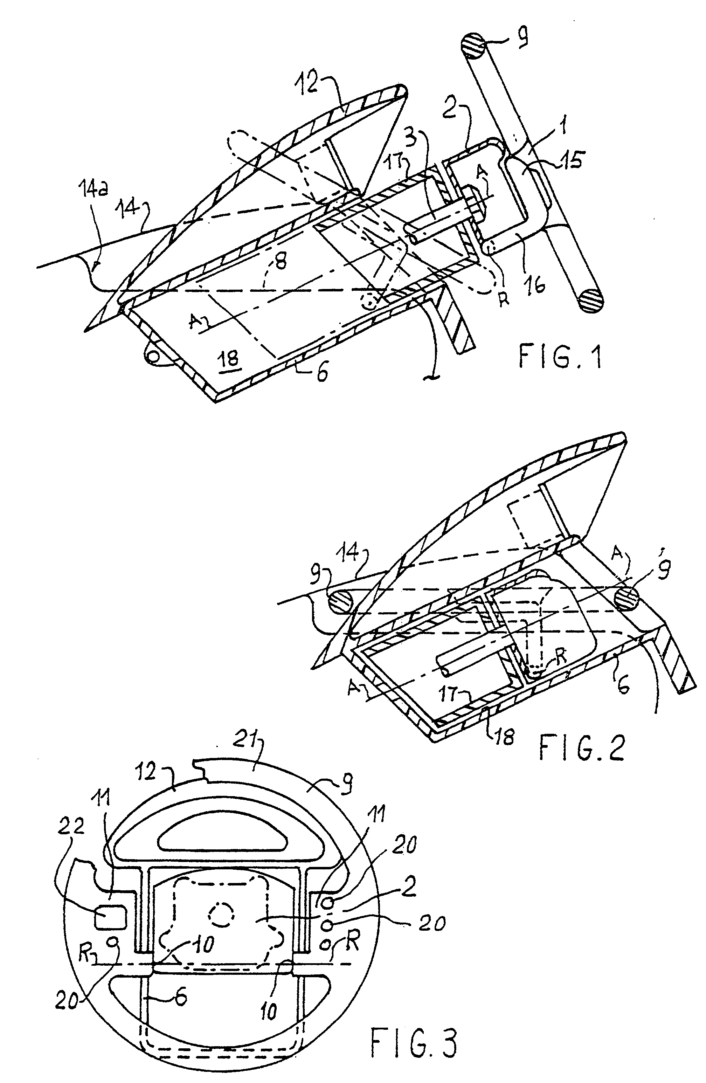

With reference to Figure 1, the reference numeral 1 indicates a steering wheel of a motor vehicle, positioned in a normal driving position; the steering wheel 1 includes a rim 9 for gripping and a hub 2 mounted axially or angularly on the upper end of a steering column 3, and rotatable with the steering column 3 and the rim 9 about an axis of rotation A-A to enable angular steering movements.

The hub 2 is formed from a substantially cylindrical hollow casing, inside which are known control and signalling devices such as, for example, the horn and the direction indicators which, for simplicity, are not illustrated, and which is also suitable to house, if desired, a safety device in the form of an air cushion of desired dimensions (full size "air-bag"); the steering column is supported by bearings, not shown for simplicity, on a box-like structure 6 which is connected to the dashboard 8 and is adjustable in a known way in terms of height and depth.

To enable the steering wheel to tilt with respect to the normal driving position shown in Figure 1, the substantially circular rim 9 which is also of circular section is hinged to the hub at two symmetrical points 10, and is therefore able to rotate with respect to the hub itself about a tilt axis R-R (Figure 3), perpendicular to the rotation axis A-A of the steering column 3 and, in this particular case, disposed at a certain radial distance therefrom, that is, off-centre with respect to the axis A-A.

To facilitate the tilting of the steering wheel over a centrally-positioned binnacle 12 projecting over the dashboard 14 of the motor vehicle and shown partially in broken outline, the steering wheel has a pair of brackets 15 fixed permanently to the rim, which substantially form the spokes for radial connection with the hub, and which, in the non-limitativeexample illustrated, are L-shape, each having an arm 16 extending parallel to the axis A-A of the steering column 3; the arms 16 are pivoted to an end of the hub 2 so as to turn with the rim 9 about the tilt axis R-R.

In order that the steering wheel can clear the upper part of the binnacle 12 and tilt completely forward over the dashboard 14, the steering column 3 is provided with a telescopic coaxial joint of known type, not shown, which allows the hub 2 and, consequently, the steering wheel 1 to slide axially; to this end the steering column 3, in addition, is not supported directly by the structure 6, but instead by an auxiliary box-like support frame 17 which is axially and telescopically slidable in a cavity 18 of the box-like structure 6 of the dashboard 14.

Figure 1 shows in a chain line an intermediate position of the steering wheel 1 during the tilting operation; Figure 2 shows the position of the steering wheel 1 when it is tilted completely forward, after having passed beyond the binnacle 12; in this position, the hub 2, together with the auxiliary frame 17, has moved axially into the space 18.

In order that the steering wheel can tilt freely, the direction indicators and headlight controls, instead of being operated by levers projecting radially from the hub 2, may be mounted directly on the steering wheel 1, on a lateral part 11 of the rim 9; by way of example, these controls have been represented schematically in Figure 3 and generally indicated with the reference numeral 20.

As is easily understood, the steering wheel 1 can tilt only if it is in a well-defined angular position with respect to the rotation axis A-A of the steering column 3; in this position, the tilt axis R-R must be horizontal and must, in this particular case, be below the steering column 3; in this position, the steering wheel 1 is orientated such that the widest part 21 of the rim 9 is at the top, and therefore easily able to clear the binnacle 12.

The tilting of the steering wheel is made possible by a selective locking control 22, shown by way of example in the form of a push button, in a lateral position on the steering wheel 1; the control 22 usually prevents the brackets 15 turning about the axis R-R and the element 17 sliding into the structure 6, so as to lock the steering wheel 1 in its operative position with the element 17 projecting (Figure 1); conversely, when activated by pressing the push-button on the steering wheel, the control 22, by means of a known device, not shown, releases the brackets 15 from the hub 2, causing them to turn about the axis R-R which is off-centre and perpendicular to the axis A-A and, at the same time, unlocks, for example, the telescopic joint of the steering column 3 and the axial lock between the element 17 and the structure 6. When the steering wheel is brought to the normal driving position in Figure 1, the locking device automatically performs the reverse operations, specifically locking the brackets 15 to the hub 2, and the telescopic joints to the steering column 3 between the elements 6 and 17. Preferably, the device 22 is such that it can only be unlocked to free the frame 17 and the brackets 15 when the axis R-R is horizontal and the vehicle is not moving, so as to avoid accidental release.

According to an embodiment that for simplicity is not illustrated, the brackets 15 may be held to the element 17 by a lever mechanism, so that it slides into the tubular structure 6 as a consequence of the rotation of the brackets 15 about the axis R-R, thereby causing the frame 17 to retract to the retracted position shown in Figure 2, into the structure 6 as a consequence of the rotation of the rim 9 towards the dashboard 14, or the frame 17 to come out of the tubular structure 6 towards the extracted position shown in Figure 1 as a consequence of the rotation of the rim 9 so as to move it away from the dashboard 4. This latter, in summary, may be provided with an appropriate semi-circular seat 14a around the binnacle 12 to house "invisibly" the upper part 21 of the rim 9.

## Claims

1. An adjustable steering wheel for a motor vehicle, including a hub (2) angularly fixed to a steering column (3) of the motor vehicle, and a substantially circular rim (9) attached to the said hub (2) for executing angular movements about a rotation axis A-A of the said steering column (3), the said rim (9) being pivoted to the said hub (2) so as to be turnable, with respect to the said hub (2), about a tilt axis R-R perpendicular to the rotation axis A-A of the steering column (3), and the said hub (2) being slidable axially along the rotation axis A-A of the steering column (3) with respect to the said dashboard (14), whereby to move selectively the said steering wheel (1) from an operative driving position to a position tilted forward, with respect to the said hub (2), towards a dashboard (14) of the said motor vehicle, and vice versa; the steering wheel being **characterised in that** the said rim (9) is rigidly attached to a pair of L-shape brackets (15), each including an arm (16) extending parallel to the said steering' column (3); the arms (16) being pivoted to an end of the said hub (2) so as to turn together with the said rim (9) about the said tilt axis R-R; the said brackets (15) being joined to the said rim (9) at points which divide the said rim into two substantially circular arcs of different sizes; the larger of the said arcs being disposed upwardly when the said tilt axis R-R is horizontal to enable the said upper arc (22) to clear a binnacle (12) projecting from the said dashboard (14).

2. An adjustable steering wheel according to Claim 1, **characterised in that** the said rim (9) is pivoted to the said hub (2) so that the said tilt axis R-R is off-centre with respect to the rotation axis of the steering column (3).

3. An adjustable steering wheel according to Claim 1 or 2, **characterised in that** it also includes releasable locking means (22) for locking both the said rotation of the said rim (9) about the said tilt axis R-R and the sliding of the said hub (2) along the rotation axis A-A of the steering column (3) so as normally to keep the said steering wheel (1) locked in the said operative driving position.

4. An adjustable steering wheel according to Claim 3, **characterised in that** the said locking means (22) can only be unlocked when the said tilt axis R-R is orientated horizontally and positioned below the rotation axis A-A of the said steering column.

5. An adjustable steering wheel according to Claim 3 or Claim 4, **characterised in that** the said steering column (3) is provided with a telescopic joint to enable the said axial sliding of the hub (2), and **in that** the said hub (2) and the said steering column (3) are supported on an auxiliary frame (17) which can move with respect to the said dashboard (14).

6. An adjustable steering wheel according to Claim 5, **characterised in that** the said auxiliary frame (17) is telescopically slidably carried by a box-like structure (6) held to the dashboard (14) and adjustable in terms of height and depth.

7. A vehicle, in particular a motor vehicle, **characterised in that** it includes an adjustable steering wheel (1) according to any of the preceding claims.

## Patentansprüche

1. Verstellbares Lenkrad für ein Kraftfahrzeug, umfassend eine Nabe (2), die drehfest an einer Lenksäule (3) des Kraftfahrzeugs befestigt ist, und einen im Wesentlichen kreisförmigen Kranz (9), der mit der Nabe (2) verbunden ist, um Winkelbewegungen um eine Drehachse A-A der Lenksäule (3) auszuführen, wobei der Kranz (9) an der Nabe (2) angelenkt ist, so daß er in Bezug zu der Nabe (2) um eine zur Drehachse A-A der Lenksäule (3) senkrechte Kippachse R-R drehbar ist, und die Nabe (2) entlang der Drehachse A-A der Lenksäule (3) in Bezug zu dem Armaturenbrett (14) axial verschiebbar ist, wodurch sich das Lenkrad (1) wahlweise aus einer Fahrbetriebsstellung in eine in Bezug zu der Nabe (2) nach vorne in Richtung auf ein Armaturenbrett (14) des Kraftfahrzeugs gekippte Stellung bewegen läßt, und umgekehrt; wobei das Lenkrad **dadurch gekennzeichnet ist, daß** der Kranz (9) starr mit einem Paar L-förmige Ausleger (15) verbunden ist, wobei jeder einen Arm (16) umfaßt, der sich parallel zu der Lenksäule (3) erstreckt; wobei die Arme (16) an einem Ende der Nabe (2) angelenkt sind, so daß sie sich zusammen mit dem Kranz (9) um die Kippachse R-R drehen; wobei die Ausleger (15) mit dem Kranz (9) an Stellen verbunden sind, die den Rand in zwei im Wesentlichen kreisförmige Bögen mit unterschiedlichen Größen unterteilen; wobei der größere der Bögen oben angeordnet ist, wenn die Kippachse R-R horizontal ist, um es zu ermöglichen, daß sich der obere Bogen (22) an einem aus dem Armaturenbrett (14) vorstehenden Gehäuse (12) vorbeibewegt.

2. Verstellbares Lenkrad nach Anspruch 1, **dadurch gekennzeichnet, daß** der Rand (9) so an der Nabe (2) angelenkt ist, daß die Kippachse R-R in Bezug zur Drehachse der Lenksäule (3) außermittig ist.

3. Verstellbares Lenkrad nach Anspruch 1 oder 2, **dadurch gekennzeichnet, daß** es auch eine lösbare Arretiereinrichtung (22) umfaßt, um sowohl die Drehung des Kranzes (9) um die Kippachse R-R als auch das Verschieben der Nabe (2) entlang der Drehachse A-A der Lenksäule (3) zu arretíeren, so daß das Lenkrad (1) normalerweise in der Fahrbetriebsstellung arretiert gehalten wird.

4. Verstellbares Lenkrad nach Anspruch 3, **dadurch gekennzeichnet, daß** die Arretiereinrichtung (22) nur entriegelt werden kann, wenn die Kippachse R-R horizontal ausgerichtet und unter der Drehachse A-A der Lenksäule positioniert ist.

5. Verstellbares Lenkrad nach Anspruch 3 oder Anspruch 4, **dadurch gekennzeichnet; daß** die Lenksäule (3) mit einer Teleskopverbindung versehen ist, um das axiale Verschieben der Nabe (2) zu ermöglichen, und dadurch, daß die Nabe (2) und die Lenksäule (3) auf einem Hilfsrahmen (17) getragen werden, der sich in Bezug zu dem Armaturenbrett (14) bewegen kann.

6. Verstellbares Lenkrad nach Anspruch 5, **dadurch gekennzeichnet, daß** der Hilfsrahmen (17) von einer am Armaturenbrett (14) gehaltenen und im Hinblick auf Höhe und Tiefe verstellbaren kastenähnlichen Struktur (6) teleskopisch verschiebbar getragen wird.

7. Fahrzeug, insbesondere ein Kraftfahrzeug, **dadurch gekennzeichnet, daß** es ein verstellbares Lenkrad (1) gemäß einem der vorangehenden Ansprüche umfaßt.

## Revendications

1. Volant de direction réglable pour véhicule automobile, comprenant un moyeu (2) fixé angulairement à une colonne de direction (3) du véhicule automobile et une jante sensiblement circulaire (9) attachée au dit moyeu (2) pour exécuter des mouvements angulaires autour d'un axe de rotation A-A de la dite colonne de direction (3), la dite jante (9) étant montée de façon pivotante sur le dit moyeu (2) de façon à pouvoir pivoter, par rapport au dit moyeu (2), autour d'un axe de baculement R-R perpendiculaire à l'axe de rotation A-A de la colonne de direction (3), et le dit moyeu (2) pouvant coulisser axialement le long de l'axe de rotation A-A de la colonne de direction (3) par rapport au dit tableau de bord (14), de façon à déplacer sélectivement le dit volant (1) d'une position normale de conduite à une position basculée vers l'avant, par rapport au dit moyeu (2), vers un tableau de bord (14) du dit véhicule automobile, et vice versa ; le volant étant **caractérisé en ce que** la dite jante (9) est rigidement fixée à une paire de supports en forme de L (15) incluant chacun un bras (16) parallèle à la dite colonne de direction (3) ; les bras (16) étant montés de façon pivotante à une extrémité du dit moyeu (2) de façon à pivoter ensemble avec la dite jante (9) autour du dit axe de basculement R-R ; les dits supports (15) étant reliés à la dite jante (9) en des points qui divisent la dite jante en deux arcs sensiblement circulaires de dimensions différentes, le plus grand des dits arcs étant disposé vers le haut lorsque le dit axe de basculement R-R est horizontal afin de permettre au dit arc supérieur (22) d'éviter un capot (12) en saillie à partir du dit tableau de bord (14).

2. Volant réglable selon la revendication 1, **caractérisé en ce que** la dite jante (9) est montée de façon pivotante sur le dit moyeu (2) de sorte que le dit axe de basculement R-R est excentré par rapport à l'axe de rotation de la colonne de direction (3).

3. Volant réglable selon la revendication 1 ou 2, **caractérisé en ce qu'**il comprend également des moyens de verrouillage libérable (22) pour bloquer à la fois la dite rotation de la dite jante (9) autour du dit axe de basculement R-R et le coulissement du dit moyeu (2) le long de l'axe de rotation A-A de la colonne de direction (3) de façon à maintenir normalement le dit volant (1) verrouillé dans la dite position de conduite normale.

4. Volant réglable selon la revendication 3, **caractérisé en ce que** les dits moyens de verrouillage (22) peuvent seulement être déverrouillés lorsque le dit axe de basculement R-R est orienté horizontalement et placé au-dessous de l'axe de rotation A-A de la dite colonne de direction.

5. Volant réglable selon la revendication 3 ou la revendication 4, **caractérisé en ce que** la dite colonne de direction (3) comporte un joint télescopique pour permettre le dit coulissement axial du moyeu (2) et **en ce que** le dit moyeu (2) et la dite colonne de direction (3) sont supportés sur un élément auxiliaire (17) qui peut se déplacer par rapport au dit tableau de bord (14).

6. Volant réglable selon la revendication 5, **caractérisé en ce que** le dit élément auxiliaire (17) est porté de façon télescopiquement coulissante par une structure en forme de boîte (6) tenue sur le tableau de bord (14) et réglable en hauteur et en profondeur.

7. Véhicule, en particulier véhicule automobile, **caractérisé en ce qu'**il comprend un volant de direction réglable (1) selon une quelconque des revendications précédentes.
